Europäisches Patentamt

(19) European Patent Office

Office européen des brevets

(11) Veröffentlichungsnummer: **0 182 966**
**A1**

(12) **EUROPÄISCHE PATENTANMELDUNG**

(21) Anmeldenummer: 85107875.8

(22) Anmeldetag: 25.06.85

(51) Int. Cl.⁴: **F 15 B 15/10**
**F 16 J 3/06**

(30) Priorität: 28.11.84 DE 3443386

(43) Veröffentlichungstag der Anmeldung:
04.06.86 Patentblatt 86/23

(84) Benannte Vertragsstaaten:
DE FR GB

(71) Anmelder: WOCO Franz-Josef Wolf & Co.
Sprudelallee 19
D-6483 Bad Soden-Salmünster(DE)

(72) Erfinder: Wolf, Franz Josef
Sprudelallee 19
D-6483 Bad Soden-Salmünster(DE)

(72) Erfinder: Reicher, Uwe
Am Birkes 3
D-6490 Schlüchtern-Elm(DE)

(74) Vertreter: Jaeger, Klaus, Dr. et al,
JAEGER & PARTNER Patentanwälte Bergstrasse 48 1/2
D-8035 München-Gauting(DE)

(54) **Stellantrieb.**

(57) Bei dem Rollmembranstellantrieb wird ein leises Abrollen der Membran (4) dadurch erreicht, daß am Deckel (2) des zweiteiligen Gehäuses des Stellantriebs eine Zarge (7) mit abgerundetem unterem stirnseitigen Rand (9) ausgebildet ist, die bis auf die halbe Arbeitshubhöhe in den Kammerteil des Stellantriebsgehäuses hineinragt und über die die Rollmembran (4) flächig und bündig anliegend herumgeführt ist, wenn sich die Rollmembran (4) in ihrer deckelnahen Endstellung befindet.

FIG.1

EP 0 182 966 A1

# JAEGER & PARTNER

PATENTANWÄLTE

0182966

WOC-158-EP
Jae/m

W O C O
Franz-Josef Wolf & Co.
Sprudelallee 19
D-6483 Bad Soden-Salmünster

---

Stellantrieb

---

## B e s c h r e i b u n g

Die Erfindung betrifft einen Stellantrieb der im Oberbegriff des Anspruchs 1 genannten Art, nämlich einen
mit Unterdruck- oder Überdruckfluid beaufschlagbaren
Stellantrieb mit einem aus Druckkammerteil und Deckel
bestehenden Gehäuse und einer zwischen beiden Gehäuseteilen peripher eingespannten Rollmembran, die eine
deckelnahe und eine kammerbodennahme stabile Endstellung
einnehmen kann.

Stellantriebe dieser Art werden in zahllosen Bereichen
der Technik eingesetzt, in denen Geräte, Maschinen oder
Anlagen mit einer Druckfluidsteuerung gestellt und gesteuert werden. Das Druckfluid ist üblicherweise Luft,
die mit Unterdruck oder Überdruck relativ zum Umgebungsdruck in eine Arbeitsdruckkammer gedrückt oder aus dieser durch Aufbringen von Unterdruck abgesaugt wird, wobei
die bewegliche flexible fluiddicht eingespannte Membran
eine der Kammerwände bildet. Die Membran, meist eine
Gummimembran, hat zumeist die Form eines einseitig offenen
napfartigen Hohlkörpers, dessen Außenrand im Gehäuse des
Stellantriebs eingespannt ist, an dessen Boden eine aus
dem Gehäuse herausragende Stellstange befestigt, meist
anvulkanisiert oder einvulkanisiert ist, und dessen
zumeist rotationssymmetrische Seitenwand profiliert oder
unprofiliert so bemessen ist, daß sie in den beiden
Hubendstellungen der Membran im Gehäuse zumindest im
wesentlichen entspannt ist. Beim Überführen der Membran
aus einer ihrer beiden Hubendstellungen in die andere
bildet die Membranseitenwand eine Rollfalte, die, zumindest
theoretisch an der inneren Seitenwand des Gehäuses des
Stellantriebs abrollen soll, während der zur Einspannebene
parallele Teil der Membran beim Übergang von der einen
in die andere stabile Hubendstellung durch die Einspannebene hindurchgeführt wird.

Rollmembranstellantriebe dieser Art werden insbesondere
im Kraftfahrzeugbau für Verriegelungssysteme, beispielsweise die Zentralverriegelung von Türen und Klappen,
verwendet, wobei sie entweder als reine Unterdruckelemente
oder als Bidruckelemente ausgelegt sind.

Nachteilig bei diesen bekannten Stellantrieben ist, daß
sich die Rollfalte der Membran selbst dann, wenn sie
durch eine entsprechende einvulkanisierte Profilierung
der Membran präformiert ist, weder zuverlässig reproduzierbar ausbildet, noch in der erwünschten und angestrebten Weise gleichmäßig an der Innenwand des Gehäuses
des Stellantriebs abrollt. Untersuchungen haben gezeigt,
daß sich die Rollfalte von Hub zu Hub höchst unterschiedlich, meist, bezogen auf den Hubvorgang, zu spät und häufig mit radialen oder tangentialen Faltungen ausbildet und dann nicht an der Gehäusewand abrollt,
sondern sich in Abstand zur Gehäusewand ausbildet und
so lange gleichsam schwimmend mit dem meist versteiften
Mittelteil der Membran in Hubrichtung wandert, bis in
dieser Falte durch die zunehmende Verformung eine
kritische Grenzspannung überschritten ist, woraufhin
die Membran in eine der angesteuerten Hubendstellung der
Membran entsprechende Konfiguration umschlägt oder umschnappt. Dieses Umspringen der Membran verursacht
Schnalzgeräusche, die insbesondere im Personenkraftfahrzeugbau unerwünscht sind. Außerdem wird die Membran durch
dieses Umspringen und durch die unregelmäßigen Faltungen
stark beansprucht, wodurch die Standzeit der hier in Rede
stehenden Rollmembran-Stellantriebe insbesondere bei
häufiger Betätigung der Antriebe merklich vermindert wird.

Die vorstehend beschriebenen unerwünschten Effekte sind
um so stärker ausgeprägt, je kleiner die im radialen
Querschnitt der Membranseitenwand auftretenden Krümmungsradien sind. Aus diesem Grund sind die bekannten Stellantriebe mit Rollmembran im Radialschnitt meist kreisförmig
oder zumindest elliptisch ausgebildet, was ebenfalls wiederum insbesondere im Kraftfahrzeugbau häufig zu Einbauproblemen führt. Im Radialschnitt stark abgeflachte Rollmembranstellantriebe wie sie beispielsweise zum Einbau
in die Türen von Personenkraftwagen erforderlich sind,
sind mit den bekannten Membranen nicht realisierbar.

Angesichts dieses Standes der Technik, liegt der Erfindung
die Aufgabe zugrunde, einen Rollmembranstellantrieb der
eingangs genannten Art zu schaffen, der leise und ohne
Schnalzgeräusche arbeitet, bei dem die Membran während
der Hubtakte reproduzierbar und ohne Ausbildung von
Tangentialfalten oder Radialfalten gleichmäßig an der

0182966

Gehäusewand abrollt, wodurch die Standzeit des Stellantriebs verlängert wird, und der diese Eigenschaften
auch noch bei extrem flacher Bauweise aufweist.

Die Erfindung löst diese Aufgabe dadurch, daß ein Rollmembranstellantrieb der eingangs genannten Art die im
kennzeichnenden Teil des Anspruchs 1 genannten Merkmale
aufweist.

Mit anderen Worten sieht die Erfindung vor, daß der
Deckelteil des Gehäuses des Stellantriebs mit einer
relativ tief in den Kammerteil des Gehäuses des Stellantriebs hineinragenden Zarge versehen ist, deren
unterer, zum Boden des Kammerteils weisender geschlossen
umlaufender Rand eine abgerundete Stirnseite aufweist,
um die herum die Seitenwand der Rollmembran von radial
außen nach radial innen flächig und bündig an der Innenwand und der Außenwand der Zarge anliegend herumgeführt
ist, wenn sich die Membran in ihrer deckelnahen Hubendstellung befindet. Dabei ist der Krümmungsradius der
abgerundeten unteren Stirnseite der Zarge des Deckels
vorzugsweise so gewählt, daß er zumindest im wesentlichen
gleich dem inneren Krümmungsradius der Rollfalte der
Rollmembran ist. Dabei reicht die Zarge des Deckels so
tief in den Kammerteil hinein, daß der abgerundete Rand
der Zarge zumindest ungefähr im Bereich der halben Arbeitshubhöhe der Rollmembran liegt. Dadurch wird nicht
nur die Rollfalte in der Seitenwand der Rollmembran vorgeformt, sondern auch der Rollweg der Rollfalte auf die
halbe Arbeitshubhöhe der Membran beschränkt. In zunächst
überraschender Weise bildet sich dabei die Rollfalte auch
dann zuverlässig wieder aus, wenn die Membran aus der
kammerbodennahen Stellung in die deckelnahe Stellung überführt wird. Ohne daß die Ursachen für diesen Effekt bislang
eindeutig erklärt werden können, wird doch angenommen, daß dies zumindest zum Teil dadurch bewirkt oder mitbewirkt
wird, daß die Membran, die um den abgerundeten Rand der
Zarge herumgeführt ist und damit zumindest auch zum
Teil zwischen der Innenwand des Kammerteils des Gehäuses
und der Außenwand der Zarge an der Gehäuseinnenwand anliegend eingespannt ist und dadurch im Sinne einer
Anlage an der Gehäusewand, wenn auch nur minimal, vorgespannt wird. Unabhängig davon, ob diese Vorstellungen nun
zutreffend sind oder nicht, haben die Versuche jedoch
reproduzierbar ergeben, daß in Gegenwart der Zarge auch
am Kammerboden bereits zu Beginn eines Membranhubes die
Rollfalte zuverlässig ausgebildet wird, während dies nicht
immer gewährleistet ist, wenn bei sonst gleichen Teilen
ein Deckel ohne Zarge verwendet wird.

Nach einer Ausgestaltung der Erfindung sind die beiden
Gehäuseteile des Stellantriebs, die am Deckel ausgebildete Zarge und die Membran so aufeinander abgestimmt
bemessen, daß die Zarge mit dem ringsum laufenden zum
Kammerboden weisenden abgerundeten unteren stirnseitigen
Rand zumindest im wesentlichen auf der halben Arbeitshubhöhe liegt und die Membran radial außerhalb unmittelbar
vor der Zarge im Abstand von zumindest im wesentlichen
einer Viertelhubhöhe vom Deckel zwischen dem Deckel und
dem Kammerteil des Gehäuses peripher eingespannt ist.

Schließlich ist nach einer anderen Ausgestaltung der
Erfindung die Rollmembran vorzugsweise so ausgebildet,
daß sie im nichteingespannten endspannten Zustand die
Form einer, bezogen auf die Einbaustellung, zum Kammerboden hin offenen Wanne oder eines zum Kammerboden hin
offenen Topfes aufweist, die eine nur in der Radialebene
gekrümmte, sonst ebene Seitenwand aufweist. Mit anderen
Worten, im Axialschnitt verläuft das Wandprofil der nichteingespannten und entspannten Membran stets linear, weist also keinerlei Profilierungen auf. Dabei ist um den Rand der auf diese Weise wannenartig oder topfartig ausgebildeten Membran herum eine nach radial innen vorspringende Einspannwulst angeformt. Der in der Radialebene liegende Arbeitsbereich der Membran ist vorzugsweise durch eine einvulkanisierte, anvulkanisierte oder in anderer Weise an der Membran befestigte Platte versteift, an der die Stellstange befestigt oder mit der diese einstückig ausgebildet ist. Zum Einbau wird die so ausgebildete Membran nach radial außen und axial in Richtung auf den Gehäusedeckel zu umgeschlagen und umgestülpt, daß die im entspannten Zustand der Membran nach radial innen vorspringende Einspannwulst nunmehr nach radial außen vorspringt und die Rollfalte bereits vorgebildet ist. Nach dem Einsetzen des Deckels und der Zarge, was im übrigen zweckmäßigerweise bereits vor dem Umschlagen der Membran erfolgt, werden dann Deckel und Membran auf den Kammerteil des Gehäuses aufgesetzt, wobei die Membran dann unter Verschließen des Gehäuses fest zwischen Deckel und Kammerteil eingespannt wird.

Das Gehäuse des Stellantriebs besteht vorzugsweise aus Kunststoff, insbesondere Polyamid oder Polypropylen, während die Membran aus Gummi, vorzugsweise Silikonkautschuk, besteht.

Die Erfindung ist im folgenden anhand eines Ausführungsbeispiels in Verbindung mit den Zeichnungen näher erläutert. Es zeigen:

Fig. 1        in Seitensicht und teilweise im
              Axialschnitt einen Stellantrieb
              gemäß einem Ausführungsbeispiel
              der Erfindung; und

Fig. 2        im Axialschnitt und in Teildarstellung

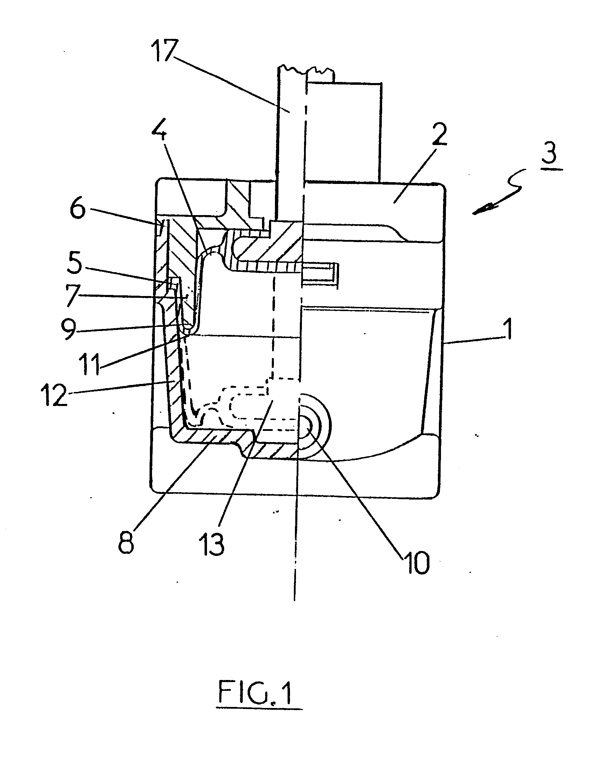

              die in Fig. 1 gezeigte Rollmembran
              im entspannten Zustand vor dem Einbau.

Der in der Fig. 1 dargestellte Stellantrieb für Druckfluidbeaufschlagung weist ein aus einem Druckkammerteil
1 und einem Deckel 2 bestehendes zweiteiliges Gehäuse
3 auf. Zwischen die beiden Gehäuseteile 1, 2 ist peripher
und fluiddicht eine Rollmembran 4 eingespannt, die in der
Darstellung der Fig. 1 in ihrer deckelnahen stabilen
Hubendstellung mit ausgezogenen Linien und in ihrer
gegenüberliegenden kammerbodennahen Hubendstellung mit
unterbrochenen Linien dargestellt ist. Am Außenrand der
Rollmembran 4 ist eine Einspannwulst 5 angeformt, mit der
die Membran 4 peripher  ringsumlaufend fluiddicht zwischen
dem Deckel 2 und dem Gehäusekammerteil 1 eingespannt ist.
Der Deckel 2 und der Kammerteil 1 des Gehäuses 3 sind
durch eine insbesondere unlösbare Schnappverbindung oder
eine Schweißverbindung 6 fest miteinander verbunden.

Am Deckel 2 ist eine in den Kammerteil 1 hineinragende
ringsumlaufende periphere Zarge 7 angeformt, deren zum
Kammerboden 8 weisender stirnseitiger Rand 9 abgerundet
ausgebildet ist. Der Krümmungsradius des Randes 9 der
Zarge 7 ist zumindest ungefähr gleich der Dicke der flexiblen Membran in dem Bereich, in dem diese flächig
und bündig an der Zarge und am abgerundeten Rand anliegend
um die Zarge von radial außen nach radial innen herumgeführt ist, wenn sich die Rollmembran 4 in ihrer in der
Fig. 1 dargestellten deckelnahen Hubendstellung befindet.
Beim Abwärtsführen der Membran 4 aus der in Fig. 1 mit
ausgezogenen Linien dargestellten deckelnahen Endstellung
in die mit unterbrochenen Linien dargestellte kammerbodennahe Endstellung, beispielsweise durch Anlegen eines
Unterdrucks an den Druckfluidstutzen 10 im Kammerteil
1, rollt die über der Rundkante 9 der Zarge 7 vorgebildete Rollfalte 11 der Rollmembran 4 an der Innenseite der
Wand 12 des Kammerteils 1 des Gehäuses anliegend ab, bis
der in der Radialebene liegende Teil 13 der Membran 4
auf dem Boden 8 des Kammerteils 1 des Gehäuses 3 aufliegt.
Der abgerundete Rand 9 der Zarge 7 liegt dabei in der
aus Fig. 1 ersichtlichen Weise ungefähr auf der halben
Arbeitshubhöhe der Membran 4, also ungefähr auf der
Hälfte des Abstandes der beiden in der Fig. 1 dargestellten
Endstellungen der Membran. Dabei liegt die Stelle, an der
die Einspannwulst 5 der Membran 4 zwischen den beiden
Gehäuseteilen in einer Art Fälzverbindung eingespannt
ist, ungefähr auf der halben Höhe zwischen dem radialen
Teil des Deckels 2 und dem abgerundeten Rand 9 der Zarge
7, liegt also ungefähr um den Betrag einer Viertel
Arbeitshubhöhe der Membran 4 unter deren oberer Hubendstellung.

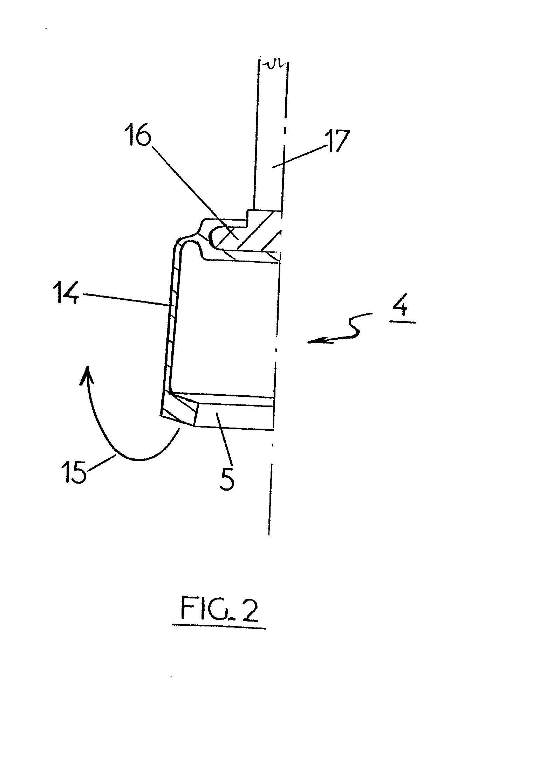

In der Fig. 2 ist die in Fig. 1 im eingebauten Zustand
dargestellte Rollmembran 4 im entspannten Zustand vor
dem Einspannen zwischen den Gehäuseteilen 1 und 2
gezeigt. In der aus Fig. 2 ersichtlichen Weise hat die
entspannte Membran 4 die Form einer nach unter zum
Kammerboden 8 offenen Wanne oder eines Topfes, dessen
umlaufende Seitenwand 14 unprofiliert ist, also im
Axialschnitt linear ausgebildet ist. Am unteren Rand
der Seitenwand 14 der Rollmembran 4 ist die im entspannten Zustand nach radial innen vorspringende Einspannwulst 5 ringsumlaufend angeformt. Zum Einbau in das
Gehäuse  wird der untere Rand der Membran 4 mit der
Einspannwulst 5 in der durch den Pfeil 15 in Figur 2
angedeuteten Weise nach radial außen und axial oben umgeschlagen oder umgestülpt, um dann in der aus Fig. 1
ersichtlichen Weise zum Einspannen der Membran zu dienen.

In der sowohl aus der Fig. 1 als auch aus der Fig. 2
ersichtlichen Weise ist im Radialteil der Rollmembran
4 eine Verstärkungsplatte 16 einvulkanisiert, an der
die Stellstange 17 des Stellantriebs befestigt ist.

# JAEGER & PARTNER

PATENTANWÄLTE

**0182966**

WOC-158-EP
Jae/m

W O C O
Franz-Josef Wolf & Co.
Sprudelallee 19
D-6483 Bad Soden-Salmünster

---

Stellantrieb

---

A n s p r ü c h e

1. Mit Unterdruck- oder Überdruckfluid beaufschlagbarer
   Stellantrieb mit einem aus Druckkammerteil (1) und
   Deckel (2) bestehenden Gehäuse (3) und einer zwischen
   beiden Gehäuseteilen peripher eingespannten Rollmembran
   (4), die eine deckelnahe und eine kammerbodennahe
   stabile Endstellung einnehmen kann,
   dadurch   g e k e n n z e i c h n e t ,
   daß der Deckel (2) eine in den Kammerteil (1) hineinragende umlaufende periphere Zarge (7) aufweist, die
   einen umlaufenden abgerundeten, zum Kammerboden (8)
   weisenden Rand (9) aufweist, um den die Rollmembran (4)
   flächig und bündig anliegend herumgeführt ist, wenn sie
   sich in ihrer deckelnahen Endstellung befindet.

BERGSTRASSE 48'½ · D-8035 MÜNCHEN-GAUTING
TELEPHON: (089) 8502030 · TELEX: 521777 Isar d

2. Stellantrieb nach Anspruch 1,
dadurch  g e k e n n z e i c h n e t ,
daß der untere abgerundete Rand (9) der Zarge (7)
des Deckels (2) bei geschlossenem Gehäuse (3) zumindest
im wesentlichen auf der halben Höhe zwischen der Innenseite des Deckels (2) und der Innenseite des Kammerbodens
(8), also zumindest im wesentlichen im Bereich der halben
Hubhöhe der Membran angeordnet ist.

3. Stellantrieb nach einem der Ansprüche 1 oder 2,
dadurch  g e k e n n z e i c h n e t ,
daß die periphere Einspannung der Membran (4) zumindest im wesentlichen auf der halben Höhe zwischen
der Innenseite des Deckels (2) und dem unteren
abgerundeten Rand (9) der Zarge (7) des Deckels (2)
erfolgt.

4. Stellantrieb nach einem der Ansprüche 1 bis 3,
dadurch  g e k e n n z e i c h n e t ,
daß die Rollmembran (4) im nicht eingespannten
entspannten Zustand die Form einer,
in Einbaustellung zum Kammerboden (8) hin offenen
Wanne oder eines Topfes mit im senkrechten Schnitt
linearer Seitenwand und nach radial innen vorspringender Einspannwulst (5) hat.

FIG.1

0182966

FIG. 2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-3 243 774  (DAIMLER BENZ) <br> * insgesamt * <br><br> ----- | 1-4 | F 15 B  15/10 <br> F 16 J    3/06 |
|  |  |  |  |
|  |  | **RECHERCHIERTE SACHGEBIETE (Int Cl 4)** |
|  |  | F 15 B <br> F 16 J |

Der vorliegende Recherchenbericht wurde für alle Patentansprüche erstellt.

| Recherchenort | Abschlußdatum der Recherche | Prüfer |
|---|---|---|
| DEN HAAG | 20-02-1986 | KNOPS J. |